# EUROPEAN PATENT APPLICATION

(11) **EP 4 019 567 A1**
(43) Date of publication of application: **29.06.2022**
(21) Application number: 21020612.4
(22) Date of filing: 03.12.2021
(51) Int. Cl.: C08G 73/06, C08L 79/04, C09D 5/44, C25D 9/02, C25D 13/06, H01B 1/12

(54) **POLYMER MIXTURE OF POLYDOPAMINE (PDA) AND POLYPYRROLE (PPY) ON A POLYMER MIXTURE OF POLYDOPAMINE (PDA) AND POLYPYRROLE (PPY) ON A CONDUCTIVE SUBSTRATE AND METHOD OF PRODUCING THE SAMECONDUCTIVE SUBSTRATE AND METHOD OF PRODUCING THE SAME**

(30) Priority: 03.12.2020 PL 43622120
(71) Applicant: University of Wroclaw, 50-137 Wroclaw (PL)
(72) Inventor: Zareba, Aleksandra, 58-309 Walbrzych (PL); Grzeszczuk, Maria, 54-151 Wroclaw (PL)
(74) Representative: Witek, Rafal

(57) **Abstract**

The subject of the invention is a blend material consisting of a conductive polydopamine fraction doped with chloride ions and a conductive polypyrrole fraction doped with chloride ions, deposited on a conductive surface (i.e. substrate electrodes).

The essence of the present invention is also the deposition procedure of the PDA-PPy blend, which consists in the fact that the process of potentiodynamic deposition of a polymer layer is carried out preferably on glassy carbon by electrochemical polymerization from a dopamine solution as a functional monomer in the form of a dopamine-containing solution with a concentration of 10⁻¹⁰ M - 1 M in the supporting electrolyte 10⁻³ M - 1 M KCl / NaCl / LiCl, with a potential linearly changed in the range from - 0.8 V to + 0.65 V, preferably in the range from - 0.5 V to + 0.5 V (vs. Ag/AgCl/Cl_{aq}.⁻(3M)). On the prior obtained polydopamine layer on the conductive surface, pyrrole electropolymerization is carried out by potentiostatic method from a solution of pyrrole as a functional monomer in the supporting electrolyte 10⁻³ M to 1 M KCl / NaCl / LiCl, with a constant potential from the range of + 0.45 V to + 1.2 V.

The essence of the present invention is also the deposition procedure of the PDA-PPy blend on the conducting surface. On polydopamine layer on the conducting surface, pyrrole electropolymerization is carried out by a potentiodynamic method from the pyrrole solution as a functional monomer in the supporting electrolyte 10⁻³ M to 1 M KCl / NaCl / LiCl, with a potential linearly changed in the range from of - 0.8 V do + 1.20 V.

The essence of the present invention is also the deposition procedure of the PDA-PPy blend, which consists in the fact that the process of the potentiostatic deposition of a polymer layer is carried out preferably on glassy carbon by electrochemical polymerization from a dopamine solution as a functional monomer in the form of a dopamine-containing solution with a concentration of 10⁻¹⁰ M - 1 M in the supporting electrolyte 10⁻³ M - 1 M KCl / NaCl / LiCl, with a constant potential from the range of + 0.12 V to + 0.65 V. On the thus obtained polydopamine layer on the conductive surface, pyrrole electropolymerization is carried out by potentiostatic method from a solution of pyrrole as a functional monomer in the supporting electrolyte 10⁻³ M to 1 M KCl / NaCl / LiCl, with a constant potential from the range of + 0.45 V to + 1.2 V.

The essence of the present invention is also the deposition procedure of the PDA-PPy blend on the conducting surface. On polydopamine layer on the conducting surface, pyrrole electropolymerization is carried out by a potentiodynamic method from the pyrrole solution as a functional monomer in the supporting electrolyte 10⁻³ M to 1 M KCl / NaCl / LiCl, with a potential linearly changed in the range from of - 0.8 V do + 1.20 V.

The essence of the present invention is also the deposition procedure of the PDA-PPy blend, which consists in the fact that the process of deposition of a polymer layer is carried out preferably on glassy carbon by a chemical method, from a solution of dopamine as a functional monomer in the supporting electrolyte 3 M - 0.00001 M KCl / NaCl / LiCl. On the thus obtained polydopamine layer on the conductive surface, pyrrole electropolymerization is carried out by potentiostatic method from a solution of pyrrole as a functional monomer in the supporting electrolyte 10⁻³ M to 1 M KCl / NaCl / LiCl, with a constant potential from the range of + 0.45 V to + 1.2 V.

The essence of the present invention is also the deposition procedure of the PDA-PPy blend on the conducting surface. On polydopamine layer on the conducting surface, pyrrole electropolymerization is carried out by a potentiodynamic method from the pyrrole solution as a functional monomer in the supporting electrolyte 10⁻³ M to 1 M KCl / NaCl / LiCl, with a potential linearly changed in the range from of - 0.8 V do + 1.20 V.

## Description

The subject of the invention is a polymer blend PDA-PPy of polydopamine (PDA) and polypyrrole (PPy) on conductive substrates and a method of its preparation, intended, inter alia, for anti-corrosion coatings or as a material for capacitors.

A copolymer of pyrrole and dopamine is known. P(Py-DA) copolymers have attractive properties which are different from those of PDA and PPy. DA can improve adhesion, while Py can provide good electrical conductivity to the copolymer P(Py-DA). A disadvantage of copolymers is the random quantitative composition of pyrrole and dopamine. Known methods do not allow the quantitative control of these components in the copolymer chain. Therefore, it is impossible to predict exactly what parameters a particular batch of copolymer will have.

The object of the invention is to obtain a polydopamine and polypyrrole blend which has favorable properties, at least such as copolymers, the blends with a specific composition and prepared using optimal methods.

The subject of the invention is the blend consisting of a conductive polydopamine fraction doped with chloride ions and a conductive polypyrrole fraction doped with chloride ions.

Furthermore, the essence of the present invention is the deposition procedure of the PDA-PPy blend layer, which consists in the fact that the process of potentiodynamic deposition of a polymer layer is carried out preferably on glassy carbon by electrochemical polymerization from a dopamine solution as a functional monomer in the form of a dopamine-containing solution with a concentration 10⁻¹⁰ M-1M in the supporting electrolyte 10⁻³ M - 1 M KCl / NaCl / LiCl, with a potential linearly changed in the range from - 0.8 V to + 0.65 V. Thus, on the obtained polydopamine layer on the conductive surface, pyrrole electropolymerization is carried out by a potentiostatic method from a pyrrole solution as a functional monomer in the supporting electrolyte 10⁻³ M to 1 M KCl / NaCl / LiCl, with a constant potential from the range of + 0.45 V to + 1.2 V.

Furthermore, the essence of the present invention is the deposition procedure of the PDA-PPy blend layer, which consists in the fact that the process of potentiodynamic deposition of a polymer layer is carried out preferably on glassy carbon by electrochemical polymerization from a dopamine solution as a functional monomer in the form of a dopamine-containing solution with a concentration 10⁻¹⁰M-1M in the supporting electrolyte 10⁻³ M - 1 M KCl / NaCl / LiCl, with a potential linearly changed in the range from - 0.8 V to + 0.65 V. Thus, on the obtained polydopamine layer on the conductive surface, pyrrole electropolymerization is carried out by potentiodynamic method from the pyrrole solution as a functional monomer in the supporting electrolyte 10⁻³ M to 1 M KCl / NaCl / LiCl, with a potential linearly changed in the range from - 0.8 V to + 1.20 V.

The essence of the present invention is also is the deposition procedure of the PDA-PPy blend layer, which consists in the fact that the process of the potentiostatic deposition of a polymer layer is carried out preferably on glassy carbon by electrochemical polymerization from a dopamine solution as a functional monomer in the form of a dopamine-containing solution with a concentration of 10⁻¹⁰ M -1 M in the supporting electrolyte 10⁻³ M - 1 M KCl / NaCl / LiCl, with a constant potential from the range of + 0.12 V to + 0.65 V. On the thus obtained polydopamine layer on the conductive surface, pyrrole electropolymerization is carried out by a potentiostatic method from the pyrrole solution as a functional monomer in the supporting electrolyte 10⁻³ M to 1 M KCl / NaCl / LiCl, with a constant potential from the range of + 0.45 V to + 1.2 V. The essence of the present invention is also is the deposition procedure of the PDA-PPy blend, which consists in the fact that the process of the potentiostatic deposition of a polymer layer is carried out preferably on glassy carbon by electrochemical polymerization from a dopamine solution as a functional monomer in the form of a dopamine-containing solution with a concentration of 10⁻¹⁰ M -1 M in the supporting electrolyte 10⁻³ M - 1 M KCl / NaCl / LiCl, with a constant potential from the range of + 0.12 V to + 0.65 V. On the thus obtained polydopamine layer on the conductive surface, pyrrole electropolymerization is carried out by potentiodynamic method from the pyrrole solution as a functional monomer in the supporting electrolyte 10⁻³ M to 1 M KCl / NaCl / LiCl, with a potential linearly changed in the range from - 0.8 V to + 1.20 V.

The essence of the present invention is also the deposition procedure of the PDA-PPy blend, which consists in the fact that the process of deposition of the first layer is carried out preferably on glassy carbon by chemical method, from a solution of dopamine as a functional monomer in the form of a dopamine-containing solution with a concentration of 10⁻¹⁰ M - 1 M in the supporting electrolyte 3 M - 0.00001 M KCl / NaCl / LiCl. On the thus obtained polydopamine layer on the conductive surface, pyrrole electropolymerization is carried out by potentiostatic method from the pyrrole solution as a functional monomer in the supporting electrolyte 10⁻³ M - 1 M KCl / NaCl / LiCl, with a constant potential from the range of + 0.45 V to + 1.2 V.

The essence of the present invention is also the deposition procedure of the PDA-PPy blend, which consists in the fact that the process of the deposition of the first layer is carried out preferably on glassy carbon by chemical method, from a solution of dopamine as a functional monomer in the form of a dopamine-containing solution with a concentration of 10⁻¹⁰ M - 1 M in the supporting electrolyte 3 M - 0.00001 M KCl / NaCl / LiCl. On the thus obtained polydopamine layer on the conductive surface, pyrrole electropolymerization is carried out by potentiodynamic method from the pyrrole solution as a functional monomer in the supporting electrolyte 10⁻³ M to 1 M KCl / NaCl / LiCl, with a potential linearly changed in the range from of - 0.8 V do + 1.20 V.

A preferred effect of the invention is, inter alia, that the blend is stable electrochemically in the potential range (-1.2V, + 1.2V) vs. Ag/AgCI/CI- (3M). In the case of pure polypyrrole, the potential value above + 0.8V causes overoxidation and degradation of the conductive polymer properties. PPy obtained on the basis of PDA-aliphatic also shows increased adhesion and electrical conductivity as compared to the layer of pure PPy obtained without prior deposition of PDA-primary. A valuable property of the obtained PDA-PPy blend is its superhydrophicity. This material also shows increased catalytic activity toward oxygen reduction. Additional advantages of this blend are a low production cost, a short synthesis time, possibility of modification during the synthesis and the fact that the solutions used for synthesis are neutral for the environment and humans. The PDA-PPy blend layer and the synthesis method of this material have potential applications in many fields, such as batteries, supercapacitors, organic electronics, water harvesting, oil / water separation, chemical capacitors, electrocatalysis, biosensors, "artificial muscles", gas separating membranes, anti-corrosive coatings.
Figure 1. shows (A) a graph of impedance in the Bode format for PDA(cv)/PPy(cv) blend, where cv indicates the potentiodynamic method of synthesis of the component polymers; (B) SEM scanning electron microscopy image.
Figure 2. shows cyclic voltamperograms of polydopamine samples on various substrate electrodes: A) GC (v=20mV/s, 25 scans); (B) Au (v=10mV/s, 25 scans); (C) Pt (v=20mV/s, 25 scans); (D) GC (v=50mV/s, 25 scans).
Figure 3. shows chronoamperograms of electrosynthesis of the primary polydopamine on various substrate electrodes at potential 0.5V: (A) GC; (B) Au; (C) Pt.
Figure 4. shows electrosyntheses of polypyrrole on: (A) Au /PDA, chronoamperometry; (B) GC/PDA, chronoamperometry; (C) GC/PDA, cyclic voltammetry (v=50mV/s, 10 scans).

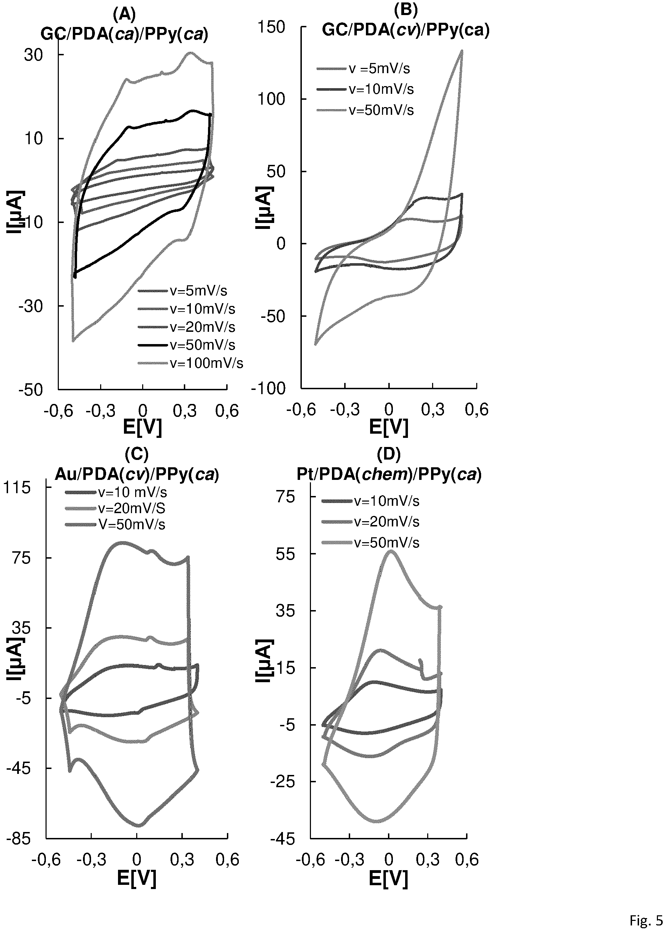

Figure 5. shows cyclic voltamperograms of PDA-PPy blend in 0.1M KCI: (A) GC/PDA(ca)/PPy(ca); (B) GC/PDA(cv)/PPy(ca); (C) Au/PDA(cv)/PPy(ca); (D) Pt/PDA(chem)/PPy(ca), where ca and cv indicate potentiostatic (chronoamperometry) and potentiodynamic (cyclic voltammetry) methods, respectively.

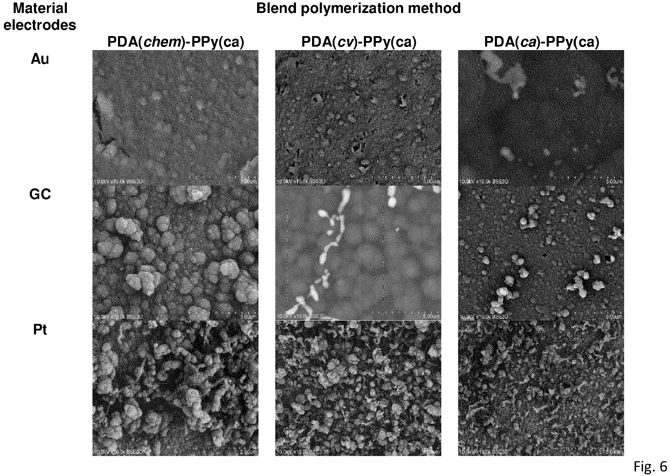

Figure 6. shows SEM images of the selected samples of PDA-PPy blends.

### Example I

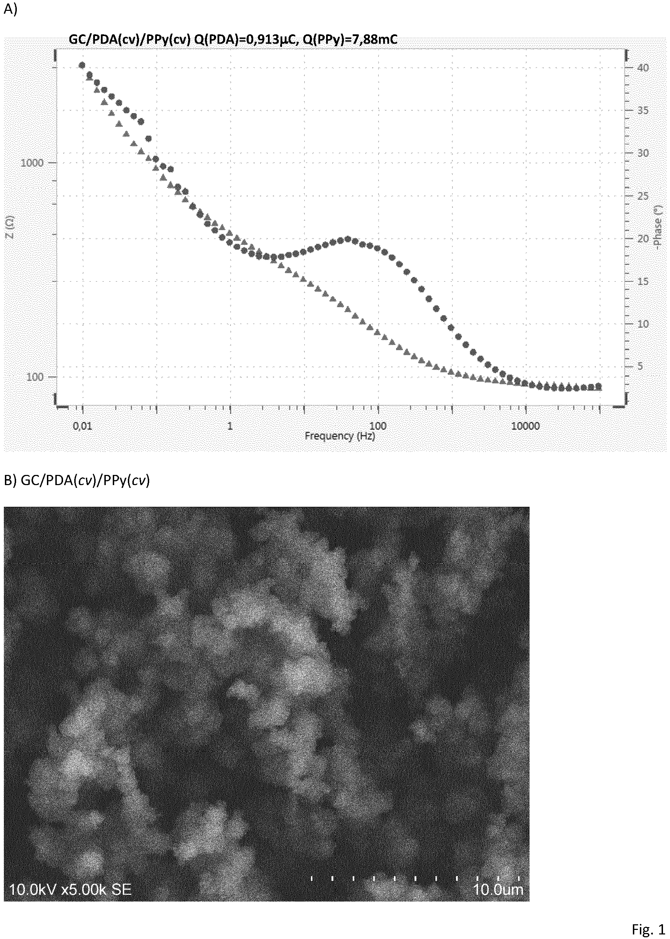

The subject of the invention is a polymeric blend deposited on a conductive glassy carbon (GC) surface consisting of a conductive polydopamine fraction doped with chloride ions and a conductive polypyrrole fraction doped with chloride ions. The polymerization charge of polydopamine was 9.13 · 10⁻⁵ C, the thickness of the PDA layer was 12 nm. The polymerization charge of PPy was 7.88 · 10⁻³ C, the thickness of the PPy layer was 0.42 µm. For the electrical characterization of the obtained blend layer, the EIS impedance was measured at the direct current potential (E = 0.0 V) for the frequency range (1 × 10⁵ Hz, 0.01 Hz) of the sinusoidal signal with an amplitude of 10 mV. The blend material at the potential E = 0.0 V showed two ranges of impedance characteristics. The first range is for frequencies (f) from 1 MHz to 501.19 Hz. In this area, the material exhibits impedance modulus Z up to 100 Ω and phase angle values from 3° to 12°. The second range encounters frequencies (f) from 501.19 Hz to 0.01 Hz. In this area, the material shows Z impedance modulus values from 500 Ω to 2850 Ω and a phase angle from 20° to 40°. The Bode impedance plot for the PDA(cv)/PPy (cv) blend is shown in Fig. 1. The SEM image for the PDA(cv)/PPy(cv) blend is shown in Fig. 1

### Example II

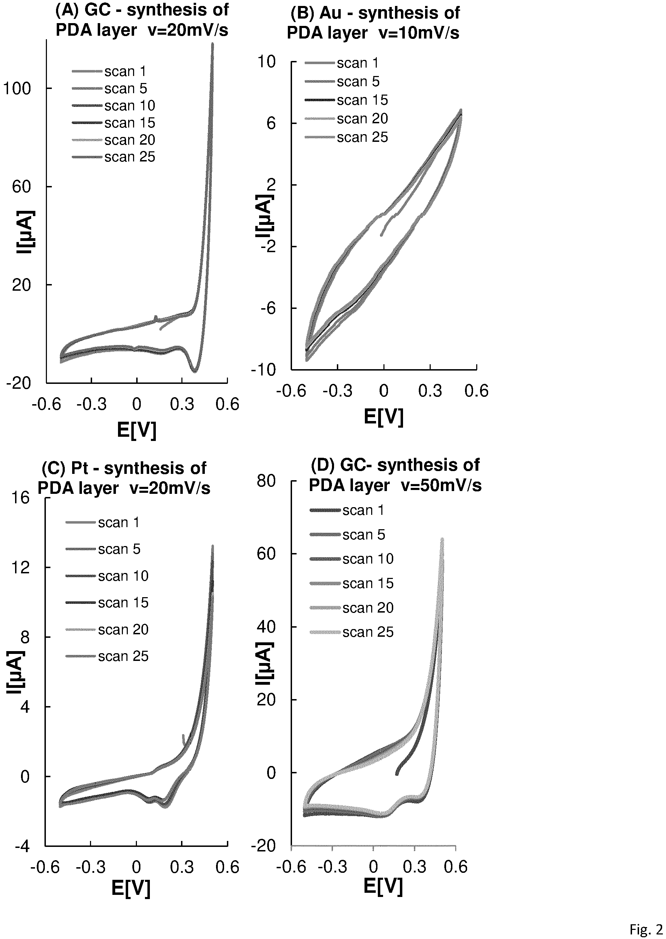

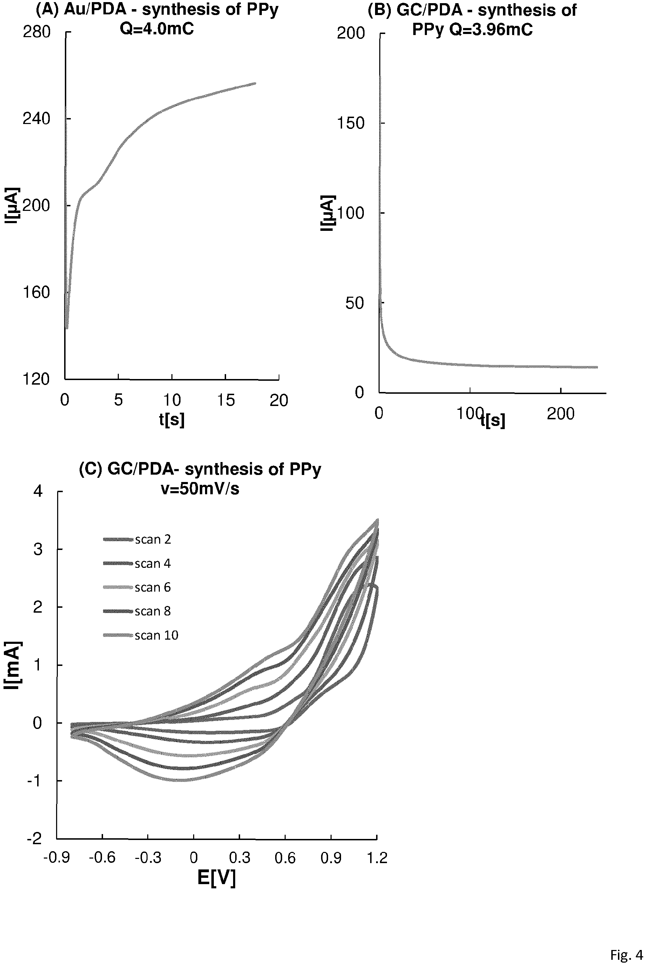

Method of obtaining PDA-PPy blend on conductive surfaces (GC, Au, Pt) by potentiodynamic deposition of a polymer layer by electrochemical polymerization from a dopamine solution as a functional monomer in the form of a dopamine-containing solution with a concentration of 0.1 M in the supporting electrolyte 0.1 M KCI, with a potential linearly changed in the range from - 0.5 V to + 0.5 V at a scanning speed of 20 mV/s for 25 cycles in the case of the GC and Pt substrate electrodes, while the scanning speed was 10 mV/s for the Au substrate electrode. After electrosynthesis, polydopamine was washed in H₂O. As a result of the electropolymerization reaction with a controlled electrode potential, the formation of a transparent thin film on the surfaces of the glassy carbon GC, Pt and Au electrodes can be seen. Cyclic voltamperograms of polydopamine electrosynthesis are shown in Fig. 2. Then, on the thus obtained polydopamine layer on the conducting surfaces (GC, Au, Pt), pyrrole electropolymerization is carried out by potentiostatic method from a solution of pyrrole as a functional monomer with a concentration of 0.15 M in the supporting electrolyte of 0.1 M KCl, with a constant potential E = 0 .70 V. After electrosynthesis of the polypolypyrrole, the polymer layer was washed with H₂O. As a result of the electropolymerization reaction with the controlled electrode potential, the formation of a dark film of polypyrrole on the surfaces of the glassy carbon GC, Pt and Au electrodes with a prior deposited polydopamine layer can be seen. The chronoamperograms of the polypyrrole electrosynthesis are shown in Fig. 4

### Example III

Method of obtaining PDA-PPy blend on a conductive surface (GC) using potentiodynamic deposition of a polymer layer by electrochemical polymerization from a dopamine solution as a functional monomer in the form of a dopamine-containing solution with a concentration of 0.1 M in the supporting electrolyte 0.1 M KCl, with a potential linearly changed in the range from - 0.5 V to + 0.5 V at a scanning speed of 50 mV/s for 25 cycles in the case of the GC substrates. After electrosynthesis, polydopamine was washed in H₂O. As a result of the electropolymerization reaction with a controlled electrode potential, the formation of a transparent thin film on the surfaces of the glassy carbon can be seen. Cyclic voltamperograms of polydopamine electrosynthesis are shown in Fig. 2. Then, on the thus obtained polydopamine layer on the conducting surface (GC), pyrrole electropolymerization is carried out by potentiodynamic method from a solution of pyrrole as a functional monomer with a concentration of 0.15 M in the supporting electrolyte of 0.1 M KCl, with a potential linearly changed in the range from - 0.8 V to + 1.20 V at a scanning speed of 50 mV / s for 10 cycles in the deoxygenated polymerization bath. After electrosynthesis of the polypyrrole, the polymer layer was washed with H₂O. As a result of the electropolymerization reaction with the controlled electrode potential, the formation of a dark film on the surface of the glassy carbon (GC) electrodes covered with the prior deposited polydopamine layer can be seen. The chronoamperograms of the polypyrrole electrosynthesis are shown in Fig. 4

### Example IV

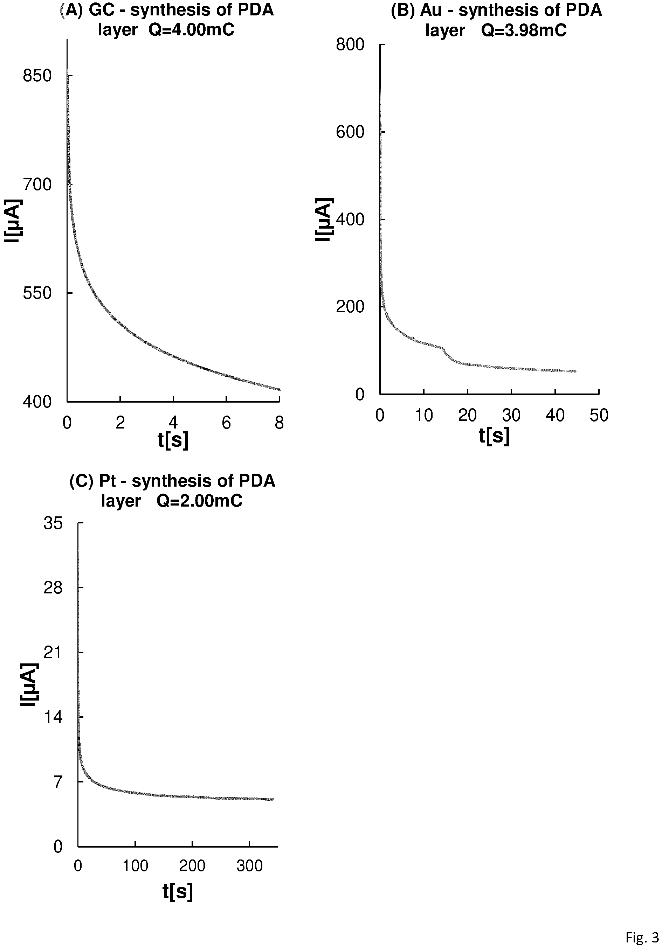

Method of obtaining PDA-PPy blend on conductive surfaces (GC, Au, Pt) by potentiostatic deposition of a polymer layer by electrochemical polymerization from a dopamine solution as a functional monomer in the form of a dopamine-containing solution with a concentration of 0.1 M in the supporting electrolyte 0.1 M KCl, at a constant potential E = 0.50 V. After electrosynthesis, polydopamine was washed in H₂O. As a result of the electropolymerization reaction with a controlled electrode potential, the formation of a transparent thin film on the surfaces of the glassy carbon GC, Au, Pt can be seen. The chronoamperograms of the polydopamine electrosynthesis are shown in Fig. 3. Then, on the thus obtained polydopamine layer on the conducting surfaces (GC, Au, Pt), pyrrole electropolymerization is carried out by potentiostatic method from a solution of pyrrole as a functional monomer with a concentration of 0.15 M in the supporting electrolyte of 0.1 M KCl, at a constant potential E = 0.70 V. After electrosynthesis of polypyrrole, the polymer layer was washed with H₂O. As a result of the electropolymerization reaction with the controlled electrode potential, the formation of a dark film on the surfaces of the glassy carbon GC, Pt and Au electrodes with the prior deposited polydopamine layer can be seen. The chronoamperograms of the polypyrrole electrosynthesis are shown in Fig. 4

### Example V

Method of obtaining PDA-PPy blend on conductive surface (GC) by potentiostatic deposition of a polymer layer using electrochemical polymerization from a dopamine solution as a functional monomer in the form of a dopamine-containing solution with a concentration of 0.1 M in the supporting electrolyte 0.1 M KCl, at a constant potential E = 0.50 V. After electrosynthesis, polydopamine was washed in H₂O. As a result of the electropolymerization reaction with a controlled electrode potential, the formation of a transparent thin film on the surface of glassy carbon can be seen. The chronoamperogram of the polydopamine electrosynthesis are shown in Fig. 3. Then, on the thus obtained polydopamine layer on the conducting surfaces (GC), pyrrole electropolymerization is carried out by potentiodynamic from a solution of pyrrole as a functional monomer with a concentration of 0.15 M in the supporting electrolyte of 0.1 M KCl, with a potential linearly changed in the range from - 0.8 V to + 1.20 V at a scanning speed of 50 mV/s for 10 cycles in the deoxygenated polymerization bath. After electrosynthesis of the polypolypyrrole, the polymer layer was washed with H₂O. As a result of the electropolymerization reaction with the controlled electrode potential, the formation of a dark film of polypyrrole on the electrode surface with the prior deposited polydopamine layer can be seen. The chronoamperograms of the polypyrrole electrosynthesis are shown in Fig. 4

### Example VI

Method of obtaining PDA-PPy blend on conductive surfaces (GC, Au, Pt) by chemical polymerization of dopamine from a dopamine solution as a functional monomer in the form of a dopamine-containing solution with a concentration of 0.1 M in the supporting electrolyte 0.1 M KCl. After synthesis, polydopamine was washed in H₂O. As a result of the polymerization the formation of a transparent thin film on the surface of GC, Au, Pt can be seen. Then, on the thus obtained polydopamine layer on the conducting surfaces (GC, Au, Pt), pyrrole electropolymerization is carried out by potentiostatic method from a solution of pyrrole as a functional monomer with a concentration of 0.15 M in the supporting electrolyte of 0.1 M KCl, at a constant potential E = 0.70 V. After electrosynthesis of the polypolypyrrole, the polymer layer was washed with H₂O. As a result of the electropolymerization reaction with the controlled electrode potential, the formation of a dark polypyrrole film on the surfaces of the glassy carbon GC, Pt and Au electrodes covered with the prior deposited polydopamine layer can be seen. The chronoamperograms of the polypyrrole electrosynthesis are shown in Fig. 4

### Example VII

Method of obtaining PDA-PPy blend on conductive surface (GC) by chemical polymerization of dopamine from a dopamine solution as a functional monomer in the form of a dopamine-containing solution with a concentration of 0.1 M in the supporting electrolyte 0.1 M KCl. After synthesis, polydopamine was washed in H₂O. As a result of the polymerization the formation of a transparent thin film on the surface of GC can be seen. Then, on the thus obtained polydopamine layer on the conducting surface (GC), pyrrole electropolymerization is carried out using potentiodynamic method, from a solution of pyrrole as a functional monomer with a concentration of 0.15 M in the supporting electrolyte of 0.1 M KCl, with a potential linearly changed in the range from - 0.8 V to + 1.20 V at a scanning speed of 50 mV / s for 10 cycles, in the case of GC. After electrosynthesis of polypolypyrrole, the polymer layer was washed with H₂O. As a result of the electropolymerization reaction with the controlled electrode potential, the formation of a dark film on the surface of the glassy carbon (GC) electrode covered with the prior deposited polydopamine layer can be seen. The chronoamperograms of the polypyrrole electrosynthesis are shown in Fig. 4

## Claims

1. A blend material, PDA-PPy, on conductive surfaces **characterized in that** the blend consists of a conductive polydopamine fraction doped with chloride ions and a conductive polypyrrole fraction doped with chloride ions.

2. The method of obtaining PDA-PPy blend on conductive surfaces by means of electrochemical polymerization, **characterized in that** the process of potentiodynamic deposition of a polymer layer is carried out preferably on glassy carbon by the electrochemical polymerization from a dopamine solution as a functional monomer in the form of a dopamine-containing solution with a concentration of 10⁻¹⁰ M - 1 M in the supporting electrolyte 10⁻³ M - 1 M KCl / NaCl / LiCl, with a potential linearly changed in the range from - 0.8 V to + 0.65 V, on the thus obtained polydopamine layer on the conductive surface, pyrrole electropolymerization is carried out by a potentiostatic method from the pyrrole solution as a functional monomer in the supporting electrolyte 10⁻³ M to 1 M KCl / NaCl / LiCl, with a constant potential from the range of + 0.45 V to + 1.2 V.

3. The method of obtaining a PDA-PPy blend layer on conductive surfaces according to claim 2, **characterized in that** on the polydopamine layer on the conducting surface, pyrrole electropolymerization is carried out by a potentiodynamic method from the pyrrole solution as a functional monomer in the supporting electrolyte 10⁻³ M to 1 M KCl / NaCl / LiCl, with a potential linearly changed in the range from of - 0.8 V do + 1.20 V.

4. The method of obtaining a PDA-PPy blend layer on conductive surfaces by means of electrochemical polymerization, **characterized in that** the process of potentiostatic deposition of a polymer layer is carried out preferably on glassy carbon by electrochemical polymerization from a dopamine solution as a functional monomer in the form of a dopamine-containing solution with a concentration of 10⁻¹⁰ M - 1 M in the supporting electrolyte 10⁻³ M - 1 M KCl / NaCl / LiCl, with a constant potential from the range of + 0.12 V to + 0.65 V, on the thus obtained polydopamine layer on the conductive surface, pyrrole electropolymerization is carried out by a potentiostatic method from the pyrrole solution as a functional monomer in the supporting electrolyte 10⁻³ M to 1 M KCl / NaCl / LiCl, with a constant potential from the range of + 0.45 V to + 1.2 V.

5. The method of obtaining a PDA-PPy blend layer on conductive surfaces according to claim 4, **characterized in that** on polydopamine layer on the conducting surface, pyrrole electropolymerization is carried out by a potentiodynamic method from the pyrrole solution as a functional monomer in the supporting electrolyte 10⁻³ M to 1 M KCl / NaCl / LiCl, with a potential linearly changed in the range from of - 0.8 V do + 1.20 V.

6. The method of obtaining a PDA-PPy blend layer on conductive surfaces by means of chemical polymerization, **characterized in that** the process of deposition of a polymer layer is carried out on the conducting surface by a chemical method, from a solution of dopamine as a functional monomer in the form of a dopamine-containing solution with a concentration of 10⁻¹⁰ M - 1 M in the supporting electrolyte 3 M - 0.00001 M KCl / NaCl / LiCl. On the thus obtained polydopamine layer on the conductive surface, pyrrole electropolymerization is carried out by a potentiostatic method from a pyrrole solution as a functional monomer in the supporting electrolyte 10⁻³ M to 1 M KCl / NaCl / LiCl, with a constant potential from the range of + 0.45 V to + 1.2 V.

7. The method of obtaining a PDA-PPy blend layer on conductive surfaces according to claim 6, **characterized in that** on polydopamine layer on the conducting surface, pyrrole electropolymerization is carried out by a potentiodynamic method from a pyrrole solution as a functional monomer in the supporting electrolyte 10⁻³ M to 1 M KCl / NaCl / LiCl, with a potential linearly changed in the range from of - 0.8 V do + 1.20 V.
